# EUROPÄISCHE PATENTSCHRIFT

(11) **EP 1 869 838 B1**
(45) Veröffentlichungstag und Bekanntmachung des Hinweises auf die Patenterteilung: **10.02.2010**
(21) Anmeldenummer: 06723568.9
(22) Anmeldetag: 21.03.2006
(51) Int. Cl.: H04W 28/18, H04L 12/56

(54) **VERFAHREN UND VORRICHTUNG ZUM AKTIVIEREN EINES PAKETDATENPROTOKOLL- KONTEXTES BEIM AUFBAU EINER PAKETDATENVERBINDUNG IN EINEM KOMMUNIKATIONSNETZ**
METHOD AND DEVICE FOR ACTIVATING A PACKET DATA PROTOCOL CONTEXT DURING THE ESTABLISHMENT OF A PACKET DATA CONNECTION IN A COMMUNICATIONS NETWORK
PROCEDE ET DISPOSITIF POUR ACTIVER UN CONTEXTE DE PROTOCOLE DE TRANSMISSION DE DONNEES PAR PAQUETS LORS DE L'ETABLISSEMENT D'UNE LIAISON DE TRANSMISSION DE DONNEES PAR PAQUETS DANS UN RESEAU DE COMMUNICATION

(30) Priorität: 23.03.2005 DE 102005014027
(43) Veröffentlichungstag der Anmeldung: 26.12.2007
(73) Patentinhaber: T-Mobile International AG, 53227 Bonn (DE)
(72) Erfinder: KLEO, Rémi, 53332 Bornheim (DE)
(74) Vertreter: Riebling, Peter
(86) Internationale Anmeldenummer: PCT/EP2006/002554
(87) Internationale Veröffentlichungsnummer: WO 2006/100024

(56) Entgegenhaltungen:
- EP-A- 1 096 742
- WO-A-03/015353
- WO-A-2004/012433
- ETSI: "APN and GGSN Selection" 3GPP TS 23.060 V6.7.0 RELEASE 6, ANNEX A, Dezember 2004 (2004-12), Seiten 197-204, XP002412801

## Beschreibung

Die Erfindung betrifft ein Verfahren und Vorrichtung zum Aktivieren eines Paketdatenprotokoll-Kontextes beim Aufbau einer Paketdatenverbindung in einem Kommunikationsnetz.

Heutige Mobilfunknetze nach dem GSM-Standard unterstützen Datendienste wie den Paketdatendienst GPRS (General Packet Radio Service) gemäß der ETSI GSM-Empfehlung 03.60 oder der 3 GPP Spezifikation 23.060. Auch das im Aufbau befindliche UMTS Netz unterstützt entsprechende Datendienste. Die Übertragung der Daten im Mobilfunknetz findet hierbei nicht verbindungsorientiert, sondern in Form von Paketdaten statt. Diese Art der Übertragung nutzt die gegebenen Übertragungsressourcen im Mobilfunknetz besser aus. So ist es möglich, mit einem Mobilkommunikationsendgerät, beispielsweise einem Mobiltelefon, eine Verbindung zu einem Paketdatennetz herzustellen. Beispielsweise geht die Architektur für den Paketdatendienst GPRS davon aus, dass das vom mobilen Teilnehmer benutzte Kommunikationsendgerät - die Mobilstation - an ihrem jeweiligen Aufenthaltsort von einem GPRS Dienstenetzknoten (SGSN: Serving GPRS Support Node) bedient wird. Um Paketdaten zu empfangen oder zu senden, ist der Zugang zu einem Paketdatennetz notwendig. Zu diesem Zweck werden Zugangsnetzknoten (GGSN: Gateway GPRS Support Nodes) bereitgestellt, die jeweils den Zugang zu dem Paketdatennetz - z.B. Internet - realisieren und ein bestimmtes Paketdatenprotokoll - z.B. Internet Protokoll - unterstützen.

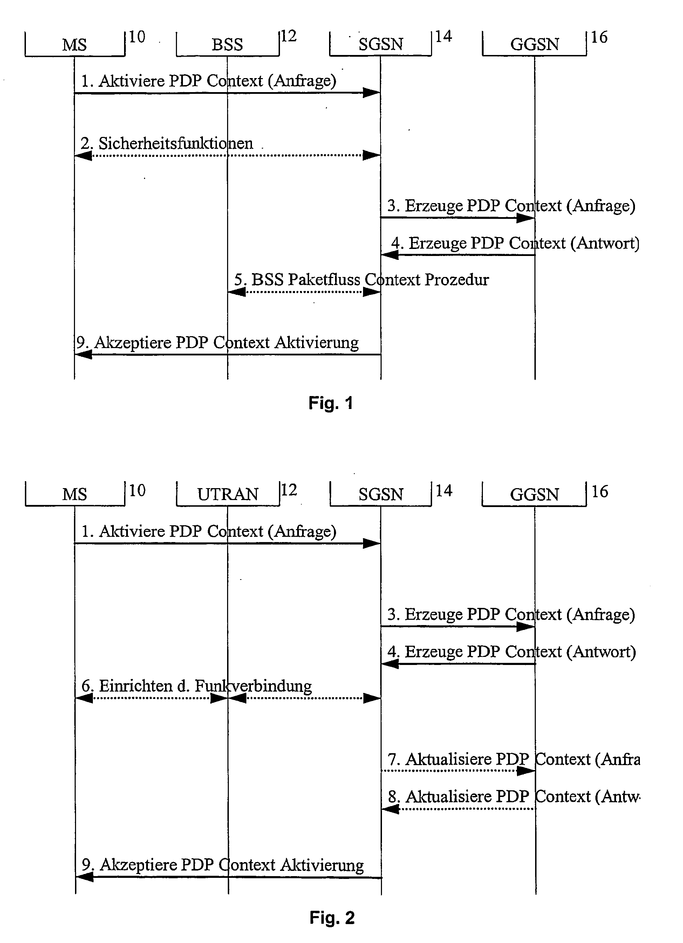

Um eine Verbindung zum Paketdatendienst aufzubauen, die die Übertragung von Datenpaketen vom Mobilfunknetz an das Internet und umgekehrt ermöglicht, ist zunächst eine Anmeldung des jeweils empfangenden Teilnehmers durchzuführen. Die Figuren 1 und 2 zeigen die Aktivierung eines Paketdatenprotokolls (PDP: Packet Data Protocol) für eine nachfolgende Übertragung von Paketdaten. Dieses geschieht mit der sogenannten "PDP Context Activation" Prozedur. Hierbei wird ein sogenannter Kontext aktiviert, d.h. ein Pfad durch das Telekommunikationsnetz, also etwa ein GPRS-Netz. Dieser Pfad wird dem Telekommunikationsgerät, dem SGSN und dem GGSN mitgeteilt. Dieses stellt die Voraussetzung für die Datenübertragung dar. Die Aktivierung des PDP Contexts wird entweder durch einen der Teilnehmer bzw. dessen Kommunikationsendgerät veranlasst, oder das Kommunikationsnetz veranlasst eines der Teilnehmergeräte jeweils dazu, den PDP Context anzufragen mittels einer Nachricht "Activate PDP Context Request". Während dieser Aktivierung des PDP Contexts erfolgt auch die sogenannte Aushandlung der Übertragungsqualität, der sogenannten Quality of Service QoS. Die QoS Nachricht enthält unter anderem das Informationselement "QoS requested", mit dem diejenigen Qualitätsparameter, die für den jeweiligen Teilnehmer gewünscht werden, beschrieben werden. Der SGSN wird dadurch veranlasst, diese Parameter für die folgende Datenübertragung vorzusehen und einzustellen.

Nach Verbindungsaufbau zwischen dem SGSN und dem Endgerät des Teilnehmers überprüft der SGSN die Rechte des Kunden (Subscription), wonach dann eine Verbindung zum GGSN aufgebaut wird, der, wie oben beschrieben, als Schnittstelle zu einem externen Netzwerk, beispielsweise dem Internet, dient. Hierfür sendet der Knoten SGSN an den Knoten GGSN die Nachricht "Create PDP Context Request". In dieser Nachricht ist der tatsächlich bestätigte QoS (QoS negotiated) enthalten, der dem vom Teilnehmer angefragten (QoS requested) entsprechen oder von diesem abweichen kann.

Anstelle einer Rufnummer, wie es bei einer leitungsvermittelten Verbindung der Fall ist, wird in der "Activate PDP Context" Nachricht ein Name eines Zugangspunktes (APN: Access Point Name) übermittelt. Der APN wird dann in der "Create PDP context" an den GGSN gesendet. Der APN ist ein logischer Name, der ein externes Paketdatennetz und/oder einen Dienst identifiziert, mit dem der Teilnehmer verbunden werden will. Neben dem APN enthält die "Activate PDP

Context" Nachricht weitere Parameter, wie QoS Parameter, Routing-Parameter, Art des Datendienstes, usw.

Probleme können entstehen, wenn der Teilnehmer den APN für den gewünschten Dienst nicht genau kennt oder sich bei der Eingabe des APN vertippt hat. Dann wird der gewünschte Dienst vom Telekommunikationsnetz nicht erkannt und kann nicht aktiviert werden. Der Teilnehmer muss dann erst den genauen APN für den gewünschten Dienst ermitteln. Das ist für den Teilnehmer unbefriedigend und unkomfortabel.

Die WO 03/015353 A1 offenbart ein GPRS/UMTS System und Verfahren zur Verbindungsherstellung im Roaming-Fall. Es wird beschrieben, wie ein Kunde einen Paketdienst über GPRS/UMTS in einem fremden Netz benutzen kann unter Verwendung des wohl bekannten DNS Verfahrens (Domain Name System).

Dokument EP 1 096 742 beschreibt wie die Dienstequalität (QoS) in GPRS/UMTS Systemen verhandelt wird.

Es ist die Aufgabe der Erfindung, ein Verfahren und Vorrichtung zum Aktivieren eines Paketdatenprotokoll-Kontextes beim Aufbau einer Paketdatenverbindung in einem Kommunikationsnetz anzugeben, die dem Teilnehmer eine komfortablere Nutzung eines Paketdatendienstes erlauben.

Diese Aufgabe wird erfindungsgemäß durch ein Verfahren und eine Vorrichtung gemäß den unabhängigen Ansprüchen gelöst.

Bevorzugte Ausgestaltungen und andere vorteilhafte Merkmale der Erfindung sind in den abhängigen Ansprüchen angegeben,

Zum Aufbau einer Paketdatenverbindung in einem mobilen Telekommunikationsnetz wird von einem Telekommunikationsendgerät eine mehrere Parameter enthaltende Nachricht zur Aktivierung einer Paketdatenverbindung an einen ersten Netzknoten des Kommunikationsnetzes übermittelt. Erfindungsgemäß wird im ersten Netzknoten mindestens ein Parameter der Nachricht analysiert und/oder verändert, und die veränderte Nachricht an mindestens einen zweiten Netzknoten übermittelt.

Diese Erfindung ermöglicht einem Betreiber des Paketdatennetzwerkes eines GPRS/UMTS Netzwerkes z.B. das vom Teilnehmer angegebene "Requested APN" zu modifizieren abhängig von einer Liste von Regeln.

Anhand der Regeln in dieser Liste werden die verschiedenen Parameter, die in der "Activate PDP Context Request" Nachricht übermittelt werden, analysiert und es wird entschieden, ob und wie der APN oder andere Parameter verändert bzw. überschrieben werden.

Durch diese Erfindung kann der Provider oder Netzbetreiber einen Dienst anbieten auch wenn der Teilnehmer sich vertippt hat oder die genaue APN eines gewünschten Dienstes nicht kennt. Der Provider oder Netzbetreiber kann auch neue APNs für vorhandene Dienste definieren, während die Teilnehmer mit "alten" Konfigurationen in ihren Endgeräten die Dienste unter Verwendung einer "alten" APN immer noch nutzen können.

Wenn vom Teilnehmer kein APN angegeben wurde, kann es vorgesehen sein, dass der Netzknoten auf einen vorgegebenen bzw. voreingestellten "Default APN" zugreift und diesen dem Teilnehmer zuweist.

Ausführungsbeispiele der Erfindung werden nachfolgend anhand der Zeichnungen beschrieben.
Figur 1 zeigt die Aktivierung eines Paketprotokoll-Kontextes in einem GSM-/GPRS-Netz.
Figur 2 zeigt die Aktivierung eines Paketprotokoll-Kontextes in einem UMTS-Netz.
Figur 3 zeigt ein Beispiel für das Überschreiben einer APN im SGSN gemäß dem Beispiel 1, Regel 1.

Erfindungsgemäß definiert der Netzbetreiber im SGSN eine Liste von Regeln. Jede Regel besteht aus verschiedenen Bedingungen und einer Aktion. Wenn alle Bedingungen einer Regel zutreffen, wird die Aktion ausgeführt und mögliche weitere Regeln werden ignoriert. Wenn mindestens eine Bedingung einer Regel nicht zutrifft, wird die nächste Regel angewendet. Die Reihenfolge der Regel ist relevant.

In Abhängigkeit der Regeln können eine oder mehrere der folgenden Aktionen durchgeführt werden:
- Der APN, der in der Nachricht "Activate PDP Context Request" vom Teilnehmer an den SGSN geschickt wird, wird überschrieben und durch einen anderen, vom Netzbetreiber definierten APN ersetzt. Der neue APN wird für den weiteren Verbindungsaufbau genutzt und an weitere Netzelemente übermittelt, beispielsweise an einen GGSN in der Nachricht "Create PDP Context Request".
- Die in der Nachricht "Activate PDP Context Request" enthaltenen QOS Parameter werden überschrieben und durch andere vom Betreiber definiert QoS Parameter ersetzt. In der Nachricht "Create PDP Context Request" werden die neuen QoS Parameter an weitere Netzelemente übermittelt.
- Beliebige andere Parameter, die in der Nachricht "Activate PDP Context Request" enthalten sind, können im SGSN überschrieben werden und in der Nachricht "Create PDP Context Request" an weitere Netzelemente übermittelt werden.

Folgende Parameter aus der "Activate PDP context Request" Nachricht können in den Bedingungen für die Regeln im SGSN analysiert werden:
- imsimask, die Imsimask beschreibt die ersten Ziffern einer IMSI. Daraus kann man beispielsweise die Netzzugehörigkeit der IMSI feststellen.
- Verschiedene Anteile der "Requested QOS", wie beispielsweise der Parameter "Requested Traffic Class", der die Art der gewünschten Verbindung angibt, wie z.B. sprechorientierter Paketdienste.
- die angeforderte APN "requested APN".

Die Aktion, die in der Regel beschrieben wird, bewirkt entweder:
- Ein Überschreiben des APN, der QOS Parameter oder anderer Parameters jeweils durch eine andere APN, andere QOS Parameter oder andere Parameters, die vom Betreiber definiert werden. Die APN bzw. die Parameter werden im SGSN überschrieben und in der "Create PDP Context Request "Nachricht zum relevanten GGSN oder andere Netzelemente übermittelt,
- Eine transparente Übertragung der Nachricht "Activate PDP Context Request, wie es üblicherweise der Fall ist, vom SGSN zum GGSN.

In einer Weiterbildung der Erfindung kann eine zweite Regelliste für einen sogenannten "Secondary PDP context Request" definiert werden. Diese zweite Regelliste weist generell die gleichen technischen Merkmale auf, wie die oben definierte Regelliste.

Eine zweite Regelliste kann für "Secondary PDP Context Request" Nachrichten definiert werden mit weniger Parametern und Merkmalen als die oben definierte Regelliste, z.B. ohne Lac und Rac.

Alle QoS Parameter, die anfänglich vom Endgerät des Teilnehmers an den SGSN übermittelt werden, können in einem "Profil" zusammengefasst werden.
Alle QoS Parameter, die vom SGSN zum GGSN übermittelt werden, können in einem "Profil" zusammengefasst werden.

Die Erfindung greift sofort nach dem Empfang der "Activate PDP context Request" Nachricht im SGSN. Die Standard-Prozeduren: "subscription checking", "APN selection", und "host configuration" werden nach dem eventuellen Überschreiben des APNs bzw. der anderen Parameter durchgeführt.

### Beispiel 1: Falscher APN Name eingegeben.

Der Netzbetreiber T-Mobile hat für den Dienst MMS das APN "mms.t-mobile.de" konfiguriert. Ein Teilnehmer von T-Mobile fragt nun beispielsweise den APN "mms" an, da ihm der korrekte APN nicht genau bekannt ist. Ohne die Erfindung wird der Kontext abgelehnt, da ein APN "mms" nicht existiert. Mit der Erfindung, wenn der Betreiber die Erfindung implementiert hat, kann der SGSN das angefragte falsche "requested APN" analysieren und mit dem korrekten APN überschreiben.

Es können folgende Parameter in der "Activate PDP Context Request" Nachricht analysiert werden:
- imsi bzw. imsimask: beschreibt die ersten Ziffern eines IMSI
- Requested APN: beschreibt die angefragte APN
- Requested Traffic Class: beschreibt die angefragte Verkehrsklasse, bei GPRS, z.B. streaming, conversational, interactive, background
- Routing Area: beschreibt einen Routingbereich, in dem sich eine Mobilfunkstation ohne Aktualisierung des aktuell zuständigen SGSN bewege kann. Ein SGSN kann mehrere Routingbereiche bedienen, wobei dieser Bestandteil des Aufenthalt-Bereiches "Location Area" ist.
- Location Area: siehe Erläuterung "Routing Area"
- New APN: beschreibt die neue, vom SGSN eingesetzte APN

Folgende Regeln können dann im SGSN konfiguriert werden:
Regel 1
   - imsi = 26201* (IMSIs von T-mobile Kunden und nur die)
   - Requested APN=*mms* (angefragte APN)
   - Requested Traffic Class=any (irgendeine Verkehrsklasse)
   - Routing Area=any (irgendein Routingbereich)
   - Location Area=any (irgendein Aufenthaltsbereich)
   - New APN= mms.t-mobile.de (neue APN)
Regel 2
   - imsi=any (irgendeine IMSI)
   - Requested APN= any (irgendeine APN)
   - Requested Traffic Class=any (irgendeine Verkehrsklasse)
   - Routing Area=any (irgendein Routingbereich)
   - Location Area=any (irgendein Aufenthaltsbereich)
   - New APN= No modification (keine Änderung der APN)

Die Reihenfolge der Regeln ist entscheidend.

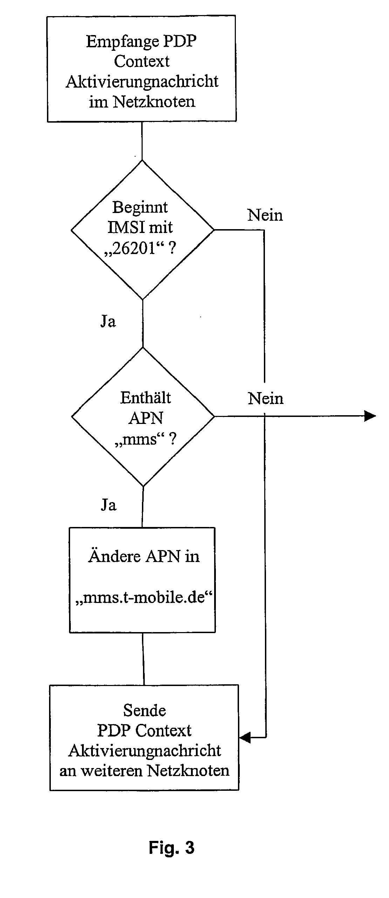

Wie sich auch aus Figur 3 ergibt, können durch Regel 1 alle T-Mobile Kunden das APN "mms.t-mobile.de" aktivieren sobald sie irgendwas mit "mms" als APN eingegeben haben.

Durch Regel 2 sind sowohl die Roamer nicht beeinflusst als auch die T-Mobile Kunden, die ein anderes APN aktivieren wollen.

### Beispiel 2: Traffic Class und MMS APN.

### Regel 1

- imsi = 26201* (IMSIs von T-Mobile Kunden und nur die)
- Requested APN=*mms* (angefragte APN)
- Requested Traffic Class=any (irgendeine Verkehrsklasse)
- Routing Area=any (irgendein Routingbereich)
- Location Area=any (irgendein Aufenthaltsbereich)
- New APN= mms.t-mobile.de (neue APN)

### Regel 2

- imsi=26201* (IMSIs von T-Mobile Kunden und nur die)
- Requested APN= any (irgendeine APN)
- Requested Traffic Class=Conversational (Sprachdienste)
- Routing Area=any (irgendein Routingbereich)
- Location Area=any (irgendein Aufenthaltsbereich)
- New APN= convers.t-mobile.de (neue APN)

### Regel 3

- imsi=any (irgendeine IMSI)
- Requested APN= any (irgendeine APN)
- Requested Traffic Class=any (irgendeine Verkehrsklasse)
- Routing Area=any (irgendein Routingbereich)
- Location Area=any (irgendein Aufenthaltsbereich)
- New APN= No modification (keine Änderung der APN)

Durch Regel 1 können alle T-Mobile Kunden das APN "mms.t-mobile.de" aktivieren sobald sie irgendwas mit "mms" als APN eingegeben haben.

Regel 2 erlaubt dem Betreiber ein Spezielles APN für sprachorientierte Paketdienste zu definieren.

Regel 3 deckt alle anderen Fälle ab.

### Beispiel 3: Location basierter Dienst, Traffic Class und MMS APN.

### Regel 1

- imsi = 26201* (IMSIs von T-Mobile Kunden und nur die)
- Requested APN=*mms* (angefragte APN)
- Requested Traffic Class=any (irgendeine Verkehrsklasse)
- Routing Area=any (irgendein Routingbereich)
- Location Area=any irgendein Aufenthaltsbereich)
- New APN= mms.t-mobile.de (neue APN)

### Regel 2

- imsi=26201* (IMSIs von T-Mobile Kunden und nur die)
- Requested APN= any (irgendeine APN)
- Requested Traffic Class=Conversational (nur Sprachdienste)
- Routing Area=any (irgendein Routingbereich)
- Location Area=any (irgendein Aufenthaltsbereich)
- New APN= convers.t-mobile.de (neue APN)

### Regel 3

- imsi=26201* (IMSIs von T-Mobile Kunden und nur die)
- Requested APN= any (irgendeine APN)
- Requested Traffic Class=any (irgendeine Verkehrsklasse)
- Routing Area=any (irgendein Routingbereich)
- Location Area=123,456,789 (nur bestimmte Aufenthaltsbereiche)
- New APN= spezial.cebit (neue APN)

### Regel 4

- imsi=any (irgendeine IMSI)
- Requested APN= any (irgendeine APN)
- Requested Traffic Class=any (irgendeine Verkehrsklasse)
- Routing Area=any (irgendein Routingbereich)
- Location Area=any (irgendein Aufenthaltsbereich)
- New APN= No modification (keine Änderung der APN)

Regel 1 ist wie im Beispiel 1 .

Regel 2 erlaubt dem Betreiber ein spezielles APN für sprachorientierte Paketdienste zu definieren.

Regel 3 erlaubt dem Betreiber ein spezielles APN für lokale Dienste anzubieten, zum Beispiel für die Cebit Messe.

Regel 4 deckt alle anderen Fälle ab.

### Beispiel 4: in Tabellenform:

| Regel | IMSI-mask | AngefragteAPN in "Activate PDP" | Angefragte QoS in "Activate PDP"-Traffic Class | alle anderen Parameter des "Angefragten QoS" in "Activate PDP context" | LAC/RAC (Location/ Routing Area Code) | APN gesendet in "Create PDP Context" zum GGSN |
|---|---|---|---|---|---|---|
| 1 | 26201* | Wap.t-d1.de | Irgendeine | Irgendeine | Irgendeiner | Wap |
| 2 | 26201*, 23001* | Irgendeine | conversational | Irgendeine | Irgendeiner | conversational. alltmo.de |
| 3 | 26201* | Irgendeine | Irgendeine | Irgendeine | Irgendeiner | Festgelegte APN. t-mobile.de |
| ... | ... | ... | ... | ... | ... | ... |
| Letzte Regel | Irgendeine | Irgendeine | Irgendeine | Irgendeine | Irgendeiner | Keine Änderung |

Erläuterung der Tabelle: Wenn ein mobiles Kommunikationsendgerät mit der IMSI 26201 123 456 7890 eine "Activate PDP Context Request" Nachricht aus irgend einem Aufenthaltsbereich "Location Area" und irgend einem Routingbereich "Routing Area" mit der APN "wap.t-d1.de" an einen SGSN übermittelt, wird diese APN durch die APN "wap" ersetzt.

Wenn ein mobiles Kommunikationsendgerät mit der IMSI 23001 123 456 7890 oder der IMSI 26201 123 456 7890 eine "Activate PDP Context Request" Nachricht aus irgend einer "Location Area" und irgend einer "Routing Area" mit der Traffic Class "conversational" an ein SGSN übermittelt, wird diese APN durch die APN "conversational.alltmo.de" ersetzt.

Durch diese Erfindung kann der Netzbetreiber einen Dienst anbieten auch wenn der Teilnehmer sich bei der Eingabe der APN vertippt hat. Er kann auch aus Marketinggründen neue APNs definieren, während die Teilnehmer mit alten Konfigurationen ihrer Endgeräte die Dienste immer noch nutzen können.

Durch diese Erfindung kann der Betreiber seinen Teilnehmern je nach "Routing Area" standortabhängige Dienste anbieten.

Durch diese Erfindung, kann der Betreiber verhindern, dass "inbound Roamer" bessere Dienste benutzen können als seine eigenen Kunden.

Die Routing Area und Location Area werden der "Activate PDP Context Request" Nachricht von dem Basisstationssubsystem (BSS) oder dem UMS Transceiversystem "UTRAN" beigefügt. Der SGSN kann diese Informationen dann extrahieren und auswerten.

### Abkürzungen:

- MS: Mobilstation
- BSS: Basisstations-Subsystem
- SGSN: Serving GPRS Support Node (Dienstenetzknoten)
- GGSN: Gateway GPRS Support Nodes (Zugangsnetzknoten)
- UTRAN: UMTS Terrestrial Radio Access Network (Funkzugangsnetzwerk)

## Patentansprüche

1. Verfahren zum Aufbau einer Paketdatenverbindung in einem mobilen Telekommunikationsnetz, bei dem von einem Telekommunikationsendgerät (10) eine mehrere Parameter enthaltende Nachricht (1) zur Aktivierung einer Paketdatenverbindung an einen ersten Netzknoten (14) des Kommunikationsnetzes übermittelt wird, wobei im ersten Netzknoten (14) mindestens ein Parameter der Nachricht (1) analysiert und/oder verändert wird, und eine veränderte Nachricht (3) an mindestens einen zweiten Netzknoten (16) übermittelt wird, **dadurch gekennzeichnet, dass** die Parameter der Nachricht (1) im ersten Netzknoten (14) anhand von vorgegebenen Regeln analysiert werden, und eine erste Liste von Regeln definiert ist, wobei jede Regel mindestens eine Bedingung und mindestens eine Aktion umfasst, wobei eine zweite Regelliste definiert ist, welche die gleichen technischen Merkmale aufweist, wie die erste Regelliste, wobei wenn alle Bedingungen einer Regel zutreffen, die Aktion ausgeführt und mögliche weitere Regeln ignoriert werden, wobei wenn mindestens eine Bedingung einer Regel nicht zutrifft, die nächste Regel angewendet wird.

2. Verfahren nach Anspruch 1, **dadurch gekennzeichnet, dass** die Aktion in Abhängigkeit des Zutreffens der Bedingung ausgeführt wird und das Verändern des Parameters umfasst.

3. Verfahren nach einem der vorhergehenden Ansprüche, **dadurch gekennzeichnet, dass** im ersten Netzknoten (14) einer oder mehrere der folgenden Parameter analysiert und/oder verändert werden:
- Name des Zugangspunktes,APN: Access Point Name
- IMSImask
- angeforderte Verkehrsklasse,Requested Traffic class,
- Aufenthalts- und/oder Routingbereich, Location Area und/oder Routing Area
- Parameter für die Dienstequalität, QoS Parameter
- - angeforderte Verkehrsklasse, requested Traffic Class

4. Verfahren nach einem der vorhergehenden Ansprüche, **dadurch gekennzeichnet, dass** an den ersten Netzknoten (14) eine "Activate PDP Context" Nachricht (1) übermittelt wird.

5. Verfahren nach einem der vorhergehenden Ansprüche, **dadurch gekennzeichnet, dass** an den zweiten Netzknoten (16) eine "Create PDP Context Request" Nachricht (3) übermittelt wird.

6. Verfahren nach einem der vorhergehenden Ansprüche, **dadurch gekennzeichnet, dass** das Kommunikationsnetz ein GSM-/GPRS-Kommunikationsnetz oder ein UMTS-Kommunikationsnetz ist.

7. Vorrichtung zum Aufbau einer Paketdatenverbindung in einem mobilen Telekommunikationsnetz, wobei von einem Telekommunikationsendgerät (10) eine mehrer Parameter enthaltende Nachricht (1) zur Aktivierung einer Paketdatenverbindung einen ersten Netzknoten (14) des Kommunikationsnetzes übermittelt wird, und Mittel im ersten Netzknoten (14) zum Analysieren und/oder Verändern von mindestens einem Parameter der Nachricht (1) und Mittel zur Übermittlung einer veränderten Nachricht (3) an mindestens einen zweiten Netzknoten (16) umfasst, **dadurch gekennzeichnet, dass** Mittel vorgesehen sind, welche die Parameter der Nachricht (1) im ersten Netzknoten (14) anhand von vorgegebenen Regeln analysieren, und eine erste Liste von Regeln vorhanden ist, wobei jede Regel mindestens eine Bedingung und mindestens eine Aktion umfasst, wobei eine zweite Regelliste definiert ist, welche die gleichen technischen Merkmale aufweist, wie die erste Regelliste, wobei die Vorrichtung derart ausgestaltet ist, dass wenn alle Bedingungen einer Regel zutreffen, die Aktion ausgeführt und mögliche weitere Regeln ignoriert werden, wobei wenn mindestens eine Bedingung einer Regel nicht zutrifft, die nächste Regel angewendet wird.

8. Vorrichtung nach Anspruch 7, **dadurch gekennzeichnet, dass** die an den ersten Netzknoten (14) übermittelte Nachricht eine "Activate PDP Context" Nachricht (1) ist.

9. Vorrichtung nach einem der Ansprüche 7 oder 8, **dadurch gekennzeichnet, dass** die an den zweiten Netzknoten (16) übermittelte Nachricht eine "Create PDP Context Request" Nachricht (3) ist.

10. Vorrichtung nach einem der Ansprüche 7 bis 9, **dadurch gekennzeichnet, dass** das Kommunikationsnetz ein GSM-/GPRS-Kommunikationsnetz oder ein UMTS-Kommunikationsnetz ist.

11. Vorrichtung nach einem der Ansprüche 7 bis 10, **dadurch gekennzeichnet, dass** der erste Netzknoten (14) ein Dienstenetzknoten, SGSN: Serving GPRS Support Node, und der zweite Netzknoten (16) ein Zugangsnetzknoten, GGSN; Gateway GPRS Support Node, ist.

## Claims

1. Method for making a packet data connection in a mobile telecommunications network, in which by a telecommunications terminal (10) a message (1) containing several parameters for activation of a packet data connection is sent to a first network node (14) of the communications network, at least one parameter of the message (1) being analysed and/or modified in the first network node (14), and a modified message (3) being sent to at least one second network node (16), **characterised in that** the parameters of the message (1) are analysed in the first network node (14) with the aid of preset rules, and a first list of rules is defined, each rule comprising at least one condition and at least one action, a second list of rules being defined which has the same technical characteristics as the first list of rules, the action being performed and possible further rules being ignored when all conditions of a rule hold good, the next rule being applied when at least one condition of a rule does not hold good.

2. Method according to claim 1, **characterised in that** the action is performed as a function of the condition holding good and comprises modification of the parameter.

3. Method according to one of the preceding claims, **characterised in that** one or more of the following parameters are analysed and/or modified in the first network node (14) :
- access point name (APN)
- IMSI mask
- requested traffic class
- location area and/or routing area
- quality of service (QoS) parameter
- requested traffic class.

4. Method according to one of the preceding claims, **characterised in that** an "activate PDP context" message (1) is sent to the first network node (14).

5. Method according to one of the preceding claims, **characterised in that** a "create PDP context request" message (3) is sent to the second network node (16).

6. Method according to one of the preceding claims, **characterised in that** the communications network is a GSM/GPRS communications network or a UMTS communications network.

7. Device for making a packet data connection in a mobile telecommunications network, in which by a telecommunications terminal (10) a message (1) containing several parameters for activation of a packet data connection is sent to a first network node (14) of the communications network, comprising means in the first network node (14) for analysing and/or modifying at least one parameter of the message (1) and means for sending a modified message (3) to at least one second network node (16), **characterised in that** means are provided which analyse the parameters of the message (1) in the first network node (14) with the aid of preset rules, and there is a first list of rules, each rule comprising at least one condition and at least one action, a second list of rules being defined which has the same technical characteristics as the first list of rules, the device being designed in such a way that the action is performed and possible further rules are ignored when all conditions of a rule hold good, the next rule being applied when at least one condition of a rule does not hold good.

8. Device according to claim 7, **characterised in that** the message sent to the first network node (14) is an "activate PDP context" message (1).

9. Device according to one of claims 7 or 8, **characterised in that** the message sent to the second network node (16) is a "create PDP context request" message (3).

10. Device according to one of claims 7 to 9, **characterised in that** the communications network is a GSM/GPRS communications network or a UMTS communications network.

11. Device according to one of claims 7 to 10, **characterised in that** the first network node (14) is a serving GPRS support node (SGSN) and the second network node (16) is a gateway GPRS support node (GGSN).

## Revendications

1. Procédé pour établir une liaison de données par paquets dans un réseau de télécommunication mobile, selon lequel un terminal de télécommunication (10) transmet à un premier noeud (14) du réseau de communication un message (1) contenant plusieurs paramètres et destiné à activer une liaison de données par paquets, étant précisé que dans le premier noeud de réseau (14), au moins un paramètre du message (1) est analysé et/ou modifié et qu'un message modifié (3) est transmis à au moins un second noeud de réseau (16),
**caractérisé en ce que** les paramètres du message (1) sont analysés dans le premier noeud de réseau (14) à l'aide de règles prédéfinies et qu'une première liste de règles est définie, que chaque règle comprend au moins une condition et au moins une action, qu'une seconde liste de règles est définie, qui présente les mêmes caractéristiques techniques que la première, que si toutes les conditions d'une règle s'appliquent, l'action est exécutée et d'autres règles possibles sont ignorées, et que si au moins une condition d'une règle ne s'applique pas, c'est la règle suivante qui est utilisée.

2. Procédé selon la revendication 1, **caractérisé en ce que** l'action est exécutée en fonction du fait que la condition s'applique et comprend la modification du paramètre.

3. Procédé selon l'une des revendications précédentes, **caractérisé en ce que** dans le premier noeud de réseau (14), l'un au moins des paramètres suivants est analysé et/modifié :
- nom du point d'accès, APN : Access Point Name
- IMSImask
- classe de trafic demandée, Requested Traffic class,
- zone de position et/ou zone d'acheminement, Location Area et/ou Routing Area
- paramètre pour la qualité de service, QoS Parameter
- classe de trafic demandée, requested Traffic Class.

4. Procédé selon l'une des revendications précédentes, **caractérisé en ce qu'**un message "Activate PDP Context" (activer contexte de protocole de paquets) (1) est transmis au premier noeud de réseau (14).

5. Procédé selon l'une des revendications précédentes, **caractérisé en ce qu'**un message "Create PDP Context Request" (créer demande de contexte PDP) (3) est transmis au second noeud de réseau (16).

6. Procédé selon l'une des revendications précédentes, **caractérisé en ce que** le réseau de communication est un réseau de communication GSM/GPRS ou un réseau de communication UMTS.

7. Dispositif pour établir une liaison de données par paquets dans un réseau de télécommunication mobile, dans lequel un terminal de télécommunication (10) transmet à un premier noeud (14) du réseau de communication un message (1) contenant plusieurs paramètres et destiné à activer une liaison de données par paquets, et il est prévu dans le premier noeud de réseau (14) des moyens pour analyser et/ou modifier au moins un paramètre du message (1), et des moyens pour transmettre un message modifié (3) à au moins un second noeud de réseau (16),
**caractérisé en ce qu'**il est prévu des moyens qui analysent les paramètres du message (1) dans le premier noeud de réseau (14) à l'aide de règles prédéfinies, et il y a une première liste de règles, étant précisé que chaque règle comprend au moins une condition et au moins une action, qu'une seconde liste de règles est définie, qui présente les mêmes caractéristiques techniques que la première, que le dispositif est conçu pour que si toutes les conditions d'une règle s'appliquent, l'action soit exécutée et d'autres règles possibles soient ignorées, et pour que si au moins une condition d'une règle ne s'applique pas, ce soit la règle suivante qui soit utilisée.

8. Dispositif selon la revendication 7, **caractérisé en ce que** le message transmis au premier noeud de réseau (14) est un message "Activate PDP Context" (1).

9. Dispositif selon l'une des revendications 7 ou 8, **caractérisé en ce que** le message transmis au second noeud de réseau (16) est un message "Create PDP Context Request" (3).

10. Dispositif selon l'une des revendications 7 à 9, **caractérisé en ce que** le réseau de communication est un réseau de communication GSM/GPRS ou un réseau de communication UMTS.

11. Dispositif selon l'une des revendications 7 à 10, **caractérisé en ce que** le premier noeud de réseau (14) est un noeud de réseau de service, SGSN : Serving GPRS Support Node, et le second noeud de réseau (16) est un noeud de réseau d'accès GGSN : Gateway GPRS Support Node.
